# EUROPEAN PATENT APPLICATION

(11) **EP 2 787 341 A1**
(43) Date of publication of application: **08.10.2014**
(21) Application number: 12853605.9
(22) Date of filing: 30.11.2012
(51) Int. Cl.: G01N 21/65, G01D 5/353, G01K 11/12, G01N 25/02, G01N 25/20, H01F 6/06

(54) **METHOD FOR DETECTING NORMAL CONDUCTION TRANSITION OF SUPERCONDUCTING WIRE ROD**

(30) Priority: 01.12.2011 JP 2011263580
(71) Applicant: Fujikura Ltd., Tokyo 135-8512 (JP)
(72) Inventor: OMICHI Koji, Sakura-shi, Chiba 285-8550 (JP); TERADA Yoshihiro, Sakura-shi, Chiba 285-8550 (JP)
(74) Representative: Cabinet Plasseraud
(86) International application number: PCT/JP2012/081138
(87) International publication number: WO 2013/081123

(57) **Abstract**

A method for detecting a non-superconducting transition of a superconducting wire 1 including a substrate, a superconducting layer that has a critical temperature of 77 K or more, and a metal stabilization layer, the method includes arranging an optical fiber 3 on the superconducting wire 1, injecting a measurement light into the optical fiber 3, measuring an intensity of anti-Stokes Raman scattering light of the measurement light, and detecting an occurrence of a non-superconducting transition in the superconducting wire 1 based on an intensity variation of the anti-Stokes Raman scattering light.

## Description

### TECHNICAL FIELD

The present invention relates to a method for detecting a non-superconducting transition of a superconducting wire.

Priority is claimed on Japanese Patent Application No. 2011-263580, filed December 1, 2011, the content of which is incorporated herein by reference.

### BACKGROUND ART

Superconducting wires are applicable to, for example, magnetic resonance imaging instruments, superconductive magnets of magnetic levitation railways, magnetic bearings, electric motors and the like, and superconductive cables, and toward such practical use, research for ensuring the reliability during operation of the superconducting wires are being actively conducted.

Since the critical temperature (the temperature of the upper limit maintaining superconductivity) is generally lower than an ordinary temperature, a superconductor that constitutes a superconducting wire is used by being cooled to the critical temperature or less using a cooling medium such as liquid helium or liquid nitrogen, or a refrigerator. However, even if a superconducting wire is cooled to the critical temperature or less from the outside, a thermal disturbance and so on would occur in a predetermined portion of the superconducting wire when the superconducting wire is energized. Because of these reasons, when a non-superconducting transition, that is, the transition from the superconducting state to the non-superconducting state occurs, Joule heat is generated and the temperature of the superconducting wire increases. As a result, the non-superconducting transition is accelerated at the surrounding area of the superconducting wire where the temperature increases, leading to an expansion of the region in a non-superconducting state (quench phenomenon).

Patent Document 1 discloses a method for detecting minute temperature increase from the voltage of a carbon film that is provided on a superconductor, in order to detect slight temperature increase immediately prior to quenching in which the superconductor transitions to a non-superconducting state due to a thermal disturbance. However, the method disclosed in Patent Document 1 utilizes the property of the electrical resistance value being remarkably large with respect to the temperature of the carbon film, in an extremely low-temperature region of several K (Kelvin) from the temperature of liquid helium (refer to FIG. 7 in Patent Document 1). For that reason, it is difficult to apply the method to a high-temperature superconductor in which the critical temperature is 77 K or more (for example, approximately 100 K).

Patent Document 2 discloses a method for detecting quench of a superconductor that makes polarized light from a light source enter an optical fiber wound around a superconducting wire, detects a phase difference of the polarized light from the optical fiber, and detects an unusual polarization state of the light that has transmitted through the optical fiber.

Also, Patent Document 3 (particularly in the fourth invention thereof) discloses a method for detecting quench of a superconducting wire as follows. It discloses a method that an optical fiber is attached to the outside of a superconducting wire, and an abnormality of the superconducting wire is detected by measuring the reflected light from the deformation portion of the optical fiber due to mechanical deformation of an unusual portion in the superconducting wire during electrification or by measuring the transmitted light from the other end of the optical fiber.

However, the methods disclosed in Patent Documents 2 and 3 can only determine the presence of an abnormality in an optical fiber by an increase in positional shifting or deformation of an optical fiber due to moving the superconducting wire caused by the quenching. And by the methods, it is not possible to identify positions where the quench has occurred.

Patent Document 4 and Non-patent Document 1 disclose a method for measuring temperature under an extremely low temperature with an optical fiber temperature sensor that uses a fiber Bragg grating (FBG). An FBG is an optical fiber device in which a periodical refractive index modulation (grating) is formed in the core of an optical fiber, and it has a selective reflection property of a specified wavelength (Bragg wavelength) that is determined by the effective refractive index of the core and the grating period. In an FBG, when the ambient temperature changes, since both the effective refractive index of the core and the grating period change, the Bragg wavelength is shifted. Therefore, if the relation between the ambient temperature and the Bragg wavelength is determined in advance, an FBG can be used as a temperature sensor.

In Patent Document 4, a coating member (a coating) such as aluminum (Al) or polymethyl methacrylate (PMMA) that have larger thermal expansion coefficient (TEC) than silica, which is the main component of an optical fiber, is provided around the FBG portion of an optical fiber, to enhance the sensitivity of the temperature sensor by increasing the Bragg wavelength shift due to temperature. Also, a measurement example of strain, temperature, and linear expansion is shown in Non-patent Document 1.

### PRIOR ART DOCUMENTS

### PATENT DOCUMENTS

[Patent Document 1] Japanese Patent No. 2577682
[Patent Document 2] Japanese Unexamined Patent Application, First Publication No. H08-304271
[Patent Document 3] Japanese Unexamined Patent Application, First Publication No. H07-170721
[Patent Document 4] U.S. Patent No. 6,072,922

### NON-PATENT DOCUMENTS

[Non-patent Document 1] Wolfgang Ecke et al., "Fiber-optic Bragg grating sensors for structural health monitoring at cryogenic temperatures", Proceedings of SPIE, Vol. 6530, 653002 (2007).

### DISCLOSURE OF INVENTION

### PROBLEMS TO BE SOLVED BY THE INVENTION

If it is possible to measure the temperature variation of a superconducting wire accompanying quench with an optical fiber temperature sensor having an FBG disclosed in Patent Document 4 and Non-patent Document 1, it may be capable of detecting the quench. However, usually, a superconducting wire is used in several hundreds of meters. When quench occurs in the portions of a superconducting wire with several hundreds of meters, the temperature of a quench starting point reaches 600 to 700 K while the quench transfers in approximately several meters although the temperature varies by circumstances of the superconducting wire such as a cooling temperature and an applied electrical current. As a result, there is a risk that characteristics of the superconducting wire, such as critical temperature and the critical current, decrease or burn out of the superconducting wire occurs. Therefore, in order to detect the quench before the characteristics decrease and the burn out of the superconducting wire occur, it is necessary to detect the temperature variation within several meters from the quench starting point at the longest. In other words, in a case of an optical fiber temperature sensor having an FBG, it is necessary to place the FBGs as sensing heads at multiple points at intervals of several meters. For example, when single optical fiber is arranged in a superconducting wire of 300 m and FBGs are provided with an interval of 1 m at the optical fiber, the total number of FBGs is 300. However, there is a following problem in a method of placing FBGs at multiple points of single optical fiber.

In a Wavelength Division Multiplexing (WDM) method in which FBGs with different Bragg wavelengths are placed at multiple points, since the number of the multiple points of the FBGs is limited by allocated wavelength bandwidth, the number of the multiple points is approximately 20 at a maximum.

In a Time Division Multiplexing (TDM) method in which FBGs with the same Bragg wavelength are placed at multiple points at predetermined fiber intervals, taking into consideration of a pulse width performance of a pulse light source which is used as a measurement light source, 2 m or more is necessary for a fiber interval between the FBGs. In addition, taking into consideration of a performance of a measurement apparatus, the number of multiple FBGs is limited to approximately 100.

In an Optical Frequency Domain Reflectometry (OFDR) method in which FBGs with the same Bragg wavelength are placed at multiple points at arbitrary fiber intervals, a measurable fiber length is limited to approximately 100 m by time coherency of a tunable laser which is used as a measurement light.

Therefore, it is impossible for any of the measurement methods to detect quench by arranging 300 FBGs in total with an interval of 1 m with respect to the superconducting wire of 300 m as illustrated.

The present invention has been achieved in view of the above circumstances, and is to provide a method for detecting the non-superconducting transition of a superconducting wire that, in addition to detecting the occurrence of the non-superconducting transition using the optical fiber, can identify a position where the non-superconducting transition has occurred.

### MEANS FOR SOLVING THE PROBLEMS

An aspect of the present invention is a method for detecting a non-superconducting transition of a superconducting wire including a substrate, a superconducting layer that has a critical temperature of 77 K or more, and a metal stabilization layer, the method includes arranging an optical fiber on the superconducting wire, injecting a measurement light into the optical fiber, measuring an intensity of anti-Stokes Raman scattering light of the measurement light, and detecting an occurrence of a non-superconducting transition in the superconducting wire based on an intensity variation of the anti-Stokes Raman scattering light.

It is possible to detect the occurrence of the non-superconducting transition in the superconducting wire based on whether an increase in intensity of the anti-Stokes Raman scattering light is a predetermined value or more.

It is also possible to use a pulse light as the measurement light, and to identify a position where the non-superconducting transition has occurred along a longitudinal direction of the optical fiber by measuring a time-resolved intensity of the anti-Stokes Raman scattering light of the measurement light.

The optical fiber can be a multi-mode fiber having a core diameter of 50 µm or more.

The superconducting wire can have a coil shape.

### EFFECTS OF THE INVENTION

According to the above-described aspects of the present invention, based on an intensity change of anti-Stokes Raman scattering light that occurs in an optical fiber arranged on a superconducting wire, it is possible to detect a non-superconducting transition that occurs in the superconducting wire with high responsiveness. In addition, even if the superconducting wire has a coil shape, it is possible to detect the non-superconducting transition with high accuracy.

By measuring a time-resolved intensity of the anti-Stokes Raman scattering light, it is possible to identify a position where the non-superconducting transition has occurred along a longitudinal direction of the optical fiber.

### BRIEF DESCRIPTION OF THE DRAWINGS

Fig. 1 is a structural diagram showing one example of an embodiment of performing a method for detecting a non-superconducting transition of a superconducting wire according the present invention.
Fig. 2 is a cross-sectional diagram showing one example of a state that an optical fiber is arranged on a metal stabilization layer of a superconducting wire.
Fig. 3 is a graph showing temperature dependence of an intensity of Stokes Raman scattering light and an intensity of anti-Stokes Raman scattering light, which are measured by a Raman Optical Time Domain Reflectometry method, and temperature dependence of an intensity ratio therebetween.
Fig. 4 is a structural diagram showing one example of an embodiment of performing a method for detecting a non-superconducting transition of a superconducting wire used in an exemplary embodiment.
Fig. 5A is a detailed structural diagram showing one example of an embodiment of a non-superconducting transition portion which is subjected to a method for detecting a non-superconducting transition of a superconducting wire used in an exemplary embodiment.
Fig. 5B is a cross-sectional drawing along an S - S line in Fig. 5A.
Fig. 6 is a graph showing positional dependence in an optical fiber of an intensity of Stokes Raman scattering light, an intensity of anti-Stokes Raman scattering light, and an intensity ratio therebetween before non-superconducting transition which is measured in Example 1 has occurred.
Fig. 7 is a graph showing positional dependence in an optical fiber of an intensity of Stokes Raman scattering light, an intensity of anti-Stokes Raman scattering light, and an intensity ratio therebetween at the time of non-superconducting transition which is measured in Example 1 has occurred.
Fig. 8 is a graph showing positional dependence in an optical fiber of an intensity of anti-Stokes Raman scattering light before and at the time of non-superconducting transition which is measured in Example 1 has occurred.
Fig. 9 is a graph showing positional dependence in an optical fiber of an intensity of Stokes Raman scattering light before and at the time of non-superconducting transition which is measured in Example 1 has occurred.
Fig. 10 is a graph showing positional dependence in an optical fiber of an intensity of Stokes Raman scattering light, an intensity of anti-Stokes Raman scattering light, and an intensity ratio therebetween before non-superconducting transition which is measured in Example 2 has occurred.
Fig. 11 is a graph showing positional dependence in an optical fiber of an intensity of Stokes Raman scattering light, an intensity of anti-Stokes Raman scattering light, and an intensity ratio therebetween at the time of non-superconducting transition which is measured in Example 2 has occurred.
Fig. 12 is a graph showing positional dependence in an optical fiber of an intensity of anti-Stokes Raman scattering light before and at the time of non-superconducting transition which is measured in Example 2 has occurred.
Fig. 13 is a graph showing positional dependence in an optical fiber of an intensity of Stokes Raman scattering light before and at the time of non-superconducting transition which is measured in Example 2 has occurred.

### EMBODIMENTS FOR CARRYING OUT THE INVENTION

Hereinbelow, an exemplary embodiment of the present invention is described with reference to the drawings.

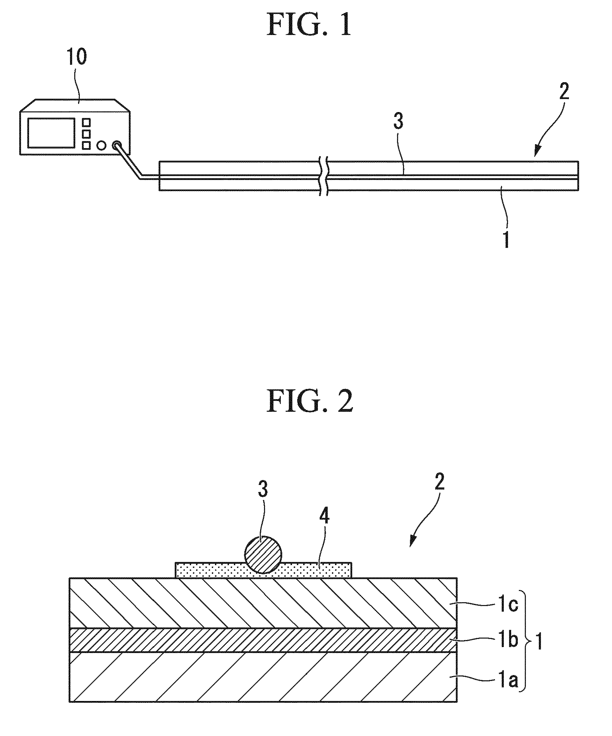

Fig. 1 is a structural diagram showing one example of an embodiment of performing a method for detecting a non-superconducting transition of a superconducting wire 1 using an optical fiber 3 and a temperature measurement instrument 10. In addition, Fig. 2 is a cross-sectional diagram showing one example of arranging an optical fiber 3 on a metal stabilization layer 1c of a superconducting wire 1.

### Superconducting Wire

The superconducting wire 1 includes at least a substrate 1a, a superconducting layer 1b that has a critical temperature of 77 K or more, and a metal stabilization layer 1c.

As the substrate 1a applicable to the superconducting wire 1 of the present exemplary embodiment, a substrate for an ordinary superconducting wire can be used, and may have high durability for an outer stress. Moreover, the substrate 1a preferably has a tape-shape in order to serve as a long cable, and preferably includes a metal that has heat resistance required for the film formation process of the superconductor and the like. Examples of the metal include various metallic materials such as silver, platinum, stainless steel, copper, and nickel alloys such as Hastelloy (registered trademark), or various metallic materials having ceramic materials provided thereon. Among the various heat-resistant metals, nickel alloy is preferred. Among these, in the case of a commercialized product, Hastelloy (trade name registered to Hanes International of the U.S.) is preferred. As Hastelloy, it is possible to use any of the types of Hastelloy B, C, G, N, W or the like, in which the amounts of molybdenum, chromium, iron, cobalt and the like differ from each other. The thickness of the substrate 1a may be suitably adjusted in accordance with the object, and ordinarily is 10 to 500 µm.

The superconductor that constitutes the superconducting layer 1b may be a publicly known superconductor as long as it has a critical temperature of 77 K or more. Specific examples include a superconductor with a composition expressed by REBa₂Cu₃Oy (where RE denotes a rare earth such as Y, La, Nd, Sm, Er, Gd and the like). Examples of this superconducting layer include Y123 (YBa₂Cu₃O_{7-X}) or Gd123 (GdBa₂Cu₃O_{7-X}). Also, a superconductor that includes another oxide superconductor, for example another oxide superconductor with a high critical temperature represented by the composition Bi₂Sr₂Caₙ₋₁CuₙO_{4+2n+δ} may be used.

Although the thickness of the superconducting layer 1b is not particularly limited, it is preferably about 0.5 to 5µm, with a uniform thickness.

The superconducting layer 1b can be deposited by sputtering, vacuum evaporation, laser evaporation, electron beam evaporation, pulsed laser deposition (PLD), ion beam assisted deposition (IBAD), chemical vapor deposition (CVD) and the like, with PLD and IBAD among these being preferred from the aspect of productivity.

Also, metallo-organic decomposition (MOD) method, which includes coating uniformly dissolved metal-organic compounds onto a substrate, and forming a thin film onto the substrate by heating the substrate to thermally decompose the coated compounds. The method is suitable for manufacturing a long, tape-shaped superconductor because it does not require a vacuum process and enables low-cost and high-speed film formation.

The metal stabilization layer 1c that is deposited on the superconducting layer 1b includes a metallic material with preferable conductivity, and it acts as a bypass through which the current of the superconducting layer 1b is commuted when the superconducting layer 1b transits from a superconducting state to a non-superconducting state. The metallic material that constitutes the metal stabilization layer 1c may be a material that has good electrical conductivity, and although not particularly limited, is preferably one that is comparatively low priced such as an alloy like copper or brass (Cu-Zn alloy), or stainless steel or the like, and more preferably copper since it has high electrical conductivity among these and is inexpensive. Thereby, it becomes possible to achieve a thick film of the metal stabilization layer 1c while keeping down material costs, and the superconducting wire 1 that can withstand a fault current can be obtained at a low price. The thickness of the metal stabilization layer 1c is preferably 10 to 300 µm. The metal stabilization layer 1c can be formed by a publicly known method, for example, it can be formed by sputtering and a method for soldering metal tape such as copper.

One, or two or more optional layers chosen from a diffusion prevention layer, a bed layer, an intermediate layer, a cap layer and the like may be interposed between the substrate 1a and the superconducting layer 1b.

The diffusion prevention layer is formed to prevent the diffusion of the constituent elements of the substrate, and is constituted from silicon nitride (Si₃N₄), aluminum oxide (Al₂O₃), or a rare earth metal oxide and the like. The diffusion prevention layer is formed, for example, by a film formation method such as sputtering, and its thickness is for example 10 to 400 nm.

The bed layer is formed to obtain the orientation of the film to be arranged thereon, and for example is constituted from for example yttrium oxide (Y₂O₃), silicon nitride (Si₃N₄), aluminum oxide (Al₂O₃) and the like. The bed layer is formed by a film formation method such as sputtering, and its thickness is for example 10 to 200 nm.

The intermediate layer is constituted from a material with a biaxial orientation in order to control the crystal orientation of the superconducting layer.

The intermediate layer may be either of a single layer structure or a multi-layer structure, and preferred materials include metal oxides such as Gd₂Zr₂O₇, MgO, ZrO₂-Y₂O₃ (YSZ), SrTiO₃, CeO₂, Y₂O₃, Al₂O₃, Gd₂O₃, Zr₂O₃, Ho₂O₃, Nd₂O₃ and the like. The intermediate layer can be deposited by a publicly known method such as a physical evaporation method like sputtering, vacuum evaporation, laser evaporation, electron-beam evaporation, ion beam assisted deposition (IBAD), and chemical vapor deposition (CVD), and metallo-organic decomposition (MOD). The thickness of the intermediate layer can be suitably adjusted, however, it is preferably in a range of 0.005 to 2 µm.

The cap layer is preferably formed by a process that crystal grains selectively grow in the lateral direction by being epitaxially grown on the surface of the intermediate layer, and subsequently overgrown in the lateral direction (a direction parallel with the surface). With such the cap layer, since a higher in-plane orientation is obtained than the intermediate layer that is made of a metal oxide layer, it is preferable to form the superconducting layer on the cap layer. Provided the material of the cap layer can exhibit the aforementioned functions, it is not particularly limited, however, detailed examples of preferred materials include CeO₂, Y₂O₃, Al₂O₃, Gd₂O₃, Zr₂O₃, Ho₂O₃, Nd₂O₃ and the like. Also, the cap layer may include a Ce-M-O oxide in which a portion of Ce in CeO₂ is substituted with another metal atom or metal ion.

It is possible to form a layer as a metal stabilization base layer between the superconducting layer 1b and the metal stabilization layer 1c. It includes a metallic material with good electrical conductivity such as Ag, and it has low contact resistance (interfacial electrical resistance) with the superconducting layer 1b. It is possible to form the metal stabilization base layer by a publicly known method such as sputtering, and the thickness is preferably 1 to 30 µm.

### Optical Fiber

With respect to the superconducting wire 1 of the present exemplary embodiment, an optical fiber 3 is arranged on the metal stabilization layer 1c. The optical fiber 3 is preferably silica glass. The material that constitutes the silica-based optical fiber can be suitably selected from a pure silica glass, a silica glass that uses dopants to raise the refractive index such as germanium (Ge) or the like, or a silica glass that uses dopants to lower the refractive index such as fluorine (F) or the like.

Generally, an optical fiber is a single-mode optical fiber with a core diameter of approximately 10 µm or a multi-mode optical fiber with a core diameter of approximately 50 µm, and either of them can be applied to the optical fiber 3 of the present invention. However, in order to increase the intensity of anti-Stokes Raman scattering light described below, it is preferable to use a multi-mode optical fiber with a core diameter of approximately 50 µm. The core diameter of the multi-mode optical fiber is not particularly limited, and for example, the fibers with the core diameter of 50 µm, 62.5 µm, 100 µm, and the like are available commercially. In addition, there are a Graded Index (GI) type and a Step Index (SI) type as a multi-mode optical fiber. In the GI type, a core refractive index continuously changes quadratically with respect to a diameter direction. In the SI type, a refractive index changes only at an interface of the core and the cladding (i.e., a core refractive index is constant with respect to a diameter direction).

Although both types can be applied to the present invention, it is preferable to use the GI type in which a propagation-rate difference of propagation modes is small when a Raman Optical Time Domain Reflectometry method described below is used.

Also, it is possible to provide a coating material around the cladding in a concentric manner in cross section. Specific examples of the coating material include resins such as ultraviolet (UV) curing acrylate, silicon, polyimide or the like, and metals such as copper (Cu) and nickel (Ni).

The optical fiber 3 is preferably arranged in contact with or adjacent to the metal stabilization layer 1c of the superconducting layer 1. The optical fiber 3 is also preferably attached to the superconducting wire 1 in order to reduce a positional shift with respect to the superconducting wire 1. In order to attach the optical fiber 3, it is desirable to use a member with a high durability in low temperatures. When the surroundings of the optical fiber 3 and the superconducting wire 1 is covered and attached by a tape, Kapton® tapes (trade name) can be used. When making the optical fiber 3 contact with or be close to the superconducting wire 1 by grease, Apiezon® grease (trade name) can be used. When making the optical fiber 3 contact with or be close to the superconducting wire 1 by adhesive, resins such as polyimide and bond metals can be used. These attachment means may be combined when being used.

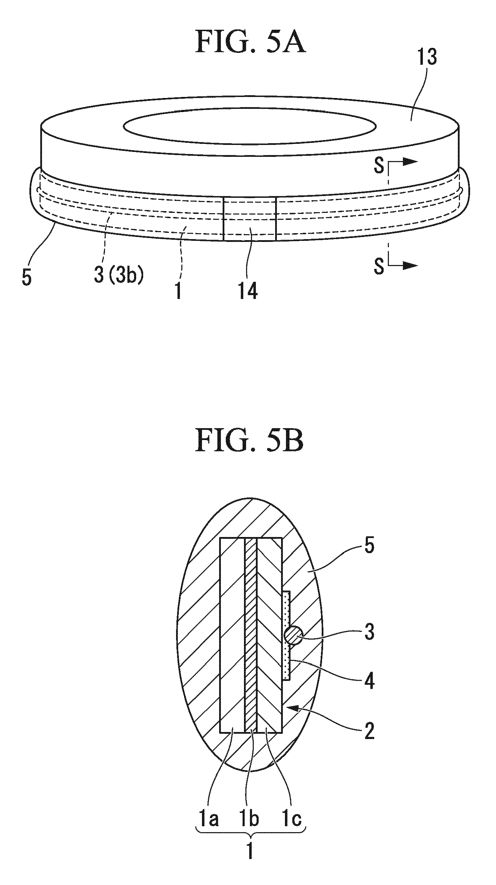

In Fig. 2, an embodiment is shown that an attachment member 4 represented by grease and adhesive is interposed between the optical fiber 3 and the metal stabilization layer 1c, and the optical fiber 3 is in contact with or adjacent to the metal stabilization layer 1c. In addition, in Fig. 5B, an embodiment is shown that the coating material 5 represented by a tape covers around a composite wire 2 where the optical fiber 3 is attached on the superconducting wire 1, and the optical fiber 3 is arranged so as to be in contact with or adjacent to the metal stabilization layer 1c.

### Method for Detecting Non-Superconducting Transition of a Superconducting Wire

In a method for detecting a non-superconducting transition of a superconducting wire employed in the present exemplary embodiment, the measurement light is injected to the optical fiber 3 arranged on the superconducting wire 1 by the temperature measurement instrument 10 shown in Fig. 1, and an intensity of anti-Stokes Raman scattering light of the measurement light is measured. As a result, based on the intensity change of anti-Stokes Raman scattering light, heat generation (i.e., quench that has a starting point where non-superconducting transition or non-superconducting transition has occurred) induced in the superconducting wire 1 can be detected. Also, pulse light is used as a measurement light, and a heat generated position in the superconducting wire 1 can be identified by time-resolving and measuring an intensity of anti-Stokes Raman scattering light. Moreover, based on this method for detecting a non-superconducting transition of a superconducting wire, it is possible to detect in real time the occurrence of the non-superconducting transition by continuously monitoring the superconducting wire 1.

The temperature measurement instrument 10 can have any configurations as long as an intensity of an anti-Stokes Raman scattering light can be measured, and further can have any configurations capable of measuring a Stokes Raman scattering light. For example, Raman Optical Time Domain Reflectometry (ROTDR) method can be employed. In this method, pulse light is used as a measurement light, and an intensity of anti-Stokes Raman scattering light and an intensity of Stokes Raman scattering light are time-resolved and measured. As a result, it is possible to calculate positional dependence in the optical fiber of these scattering light intensities.

In particular, based on time difference (returning time) between injection of the pulse light to the optical fiber and reception of the scattering light and a propagation rate (v = c/n) of the light which propagates inside the optical fiber corresponds to an effective refractive index n of the optical fiber, a distance where the light travels back and forth between the temperature measurement instrument 10 and the position at which the scattering light occurs. As a result, a position along a longitudinal direction of the optical fiber 3 can be identified. A distance D from the temperature measurement instrument 10 (i.e., light reception unit) can be determined by D = cT/2n, where T is returning time, c is light speed, and n is effective refractive index of the optical fiber.

Here in the present invention, an anti-Stokes Raman scattering light means an anti-Stokes line of a Raman scattering light, and a Stokes Raman scattering light means a Stokes line of a Raman scattering light.

Even though the optical fiber having a uniform cross-sectional structure over the entire fiber length is used, the Stokes Raman scattering light and the anti-Stokes Raman scattering light can occur at any positions without providing a structure such as an FBG on the optical fiber. Therefore, spatial resolution along a longitudinal direction of the optical fiber can be reduced for example, approximately 1 to 2 m or less by decreasing a pulse width of the pulse light to increase an accuracy of returning time that the scattering light which occurred in the optical fiber 3 returns to the temperature measurement instrument 10.

An intensity of Stokes Raman scattering light, an intensity of anti-Stokes Raman scattering light, and an intensity ratio therebetween change in accordance with the temperature around the optical fiber 3 (temperature dependence).

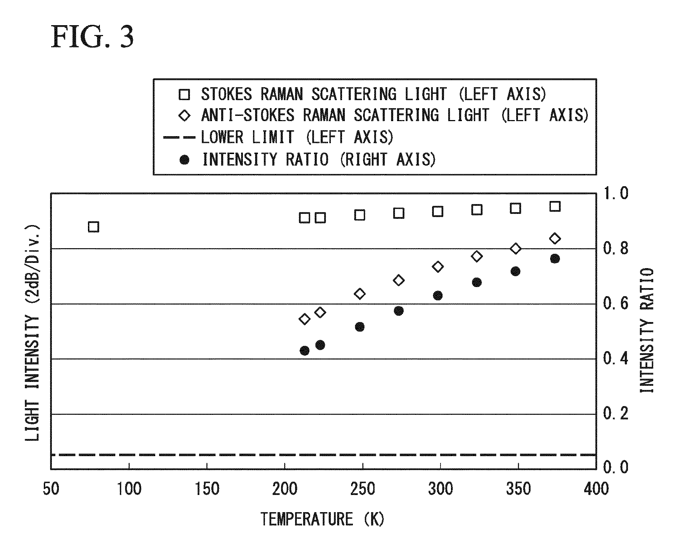

Fig. 3 is a graph showing temperature dependence of an intensity of Stokes Raman scattering light and an intensity of anti-Stokes Raman scattering light, which are measured by a Raman Optical Time Domain Reflectometry method, and temperature dependence of an intensity ratio therebetween. In this graph, the optical fiber is arranged in the thermostatic chamber at the temperature range of 220 - 370 K and is immersed in liquid nitrogen at 77K, and scattering light intensities are measured at each stage. In addition, an intensity ratio is calculated by dividing the intensity of anti-Stokes Raman scattering light by the intensity of Stokes Raman scattering light.

In the temperature range of approximately 250 to 350 K, both the intensity of Stokes Raman scattering light and the intensity of anti-Stokes Raman scattering light change nearly linearly with respect to the temperature. Therefore, by determining the temperature dependence of a ratio between the Stokes Raman scattering light and the anti-Stokes Raman scattering light in advance, a temperature around the optical fiber at each point along a longitudinal direction of the optical fiber 3 can be calculated based on a value of an intensity ratio that is actually measured.

However, in such temperature measurement instrument of the ROTDR method, when the instrument is used to measure a critical temperature (approximately 77 to 100 K) of the superconducting wire 1, the intensity of anti-Stokes Raman scattering light decreases non-linearly with respect to the temperature when the temperature is under 250 K. Moreover, when the temperature is under 100 K, an intensity of the scattering light is lower than a lower detection limit (noise level). Therefore, generally, a measurement limit (i.e., a lower limit) of a temperature measurement instrument using an ROTDR method is approximately 250 K.

The Stokes Raman scattering light shows a light intensity which is sufficiently detectable even at a low temperature of approximately 77 K; however, a slope (sensitivity) of temperature dependence is small. Therefore, when a temperature around the optical fiber is calculated based on the temperature dependence of an intensity of Stokes Raman scattering light, sufficient accuracy for detecting a non-superconducting transition cannot be obtained.

When a current is injected to the superconducting wire 1 at the critical temperature or less, the superconducting layer 1b is in a superconducting state. Since the resistance value is 0, the electrical current flows through the superconducting layer 1b, and heat generation is not induced in the superconducting wire 1.

In the superconducting wire 1, even when for whatever reason, a non-superconducting transition occurs in which the superconducting layer 1b transits from the superconducting state to the non-superconducting state, electrical resistance is occurred in the superconducting layer 1b, and electrical current flows through the metal stabilization layer 1c because it has comparatively little resistance. In that event, Joule heat is generated in the metal stabilization layer 1c in accordance with the current value and resistance value, and heat generation is induced.

As described above, when the non-superconducting transition has occurred in the superconducting wire 1, the temperature of the wire rapidly increases from the critical temperature. Also, if the intensity of anti-Stokes Raman scattering light is approximately 100 K or more which is higher than the lower detection limit, the temperature measurement can be performed with certain accuracy. As a result, based on the intensity change of anti-Stokes Raman scattering light, non-superconducting transition occurred in the superconducting wire 1 can be detected. It is also possible to measure the temperature variation of the superconducting wire 1 by the temperature measurement instrument 10 following the detection of the non-superconducting transition.

When the temperature of the superconducting wire 1 increases over a predetermined temperature or more that is over the critical temperature, an intensity of anti-Stokes Raman scattering light increases over a predetermined value or more that is over the lower detection limit. Therefore, when a predetermined value that is over the lower detection limit is set as a threshold value of the intensity of anti-Stokes Raman scattering light, it is possible to detect whether or not non-superconducting transition has occurred in a superconducting wire based on whether or not an intensity of anti-Stokes Raman scattering light is over the threshold value.

By measuring a time-resolved intensity of the anti-Stokes Raman scattering light, as described above, it is possible to measure positional dependence in the optical fiber. As a result, by calculating a position where the intensity of anti-Stokes Raman scattering light is over a predetermined threshold value, it is possible to identify a position where the non-superconducting transition has occurred.

Generally, as described above, the intensity of anti-Stokes Raman scattering light is low in the vicinity of the temperature of liquid nitrogen, and the intensity of scattering light is under the lower detection limit (noise level). However, even while the superconducting state is maintained, an intensity level which is approximately 1 dB higher than the lower detection limit can be stochastically observed. Therefore, with regard to the predetermined threshold value described above, for example, it is preferable to determine that the non-superconducting transition has occurred when the intensity is higher than the lower detection limit with approximately 2 dB or more or is higher than the lower detection limit.

In addition, it is preferable for the predetermined threshold value to be set in a level to some extent greater than a maximum value of the intensity of the anti-Stokes Raman scattering light when a superconducting state is maintained. The maximum value of the intensity of anti-Stokes Raman scattering light means a maximum value when the intensity of anti-Stokes Raman scattering light while the superconducting wire 1 is maintained in a superconductive state is continuously measured in a predetermined time. As a result, when the superconducting state is maintained, the possibility of measuring an intensity which exceeds the threshold value is decreased; therefore, a detection error can be reduced.

In this case, as the above-described predetermined threshold value, it is possible to use a value identified prior to start measuring an intensity of anti-Stokes Raman scattering light of a superconducting wire to be objected. However, in order to prevent an effect of long-term deterioration with age, while continuing the measurement of the superconducting wire to be objected, it is possible to statistically process the results so far obtained by measuring the intensity of the anti-Stokes Raman scattering light when a superconducting state is maintained in the superconducting wire 1, and to update the predetermined threshold value regularly or irregularly.

In addition, the intensity of the anti-Stokes Raman scattering light is measured continuously in a certain period at every optical fiber positions (2 points or more), and based on the results of measuring the scattering light intensity while a superconducting state is maintained in the superconducting wire 1, different threshold values can be set at each of the optical fiber positions.

As described above, the heat generation due to the non-superconducting transition is mainly Joule heat corresponding to the current value that flows in the metal stabilization layer 1c and the resistance value of the metal stabilization layer 1c, and the amount of heat generation strongly depends on the current value. Therefore, with regard to the predetermined threshold value for determining whether or not the non-superconducting transition is occurred, it is possible to set the value that differs based on an injected current value of the superconducting wire.

### Superconducting Protection Instrument

The method for detecting the non-superconducting transition of a superconducting wire of the present exemplary embodiment can be used for a protection instrument of a superconducting wire in operation.

The superconducting wire protection instrument can be provided with, an analyzing device such as a computer that transforms an intensity of the anti-Stokes Raman scattering light measured at the temperature measurement instrument 10 of FIG. 1 into an electrical signal, receives the electrical signal, and automatically analyzes it according to the aforementioned method for detecting the non-superconducting transition, a regulator that regulates the amount of injected current to the superconducting wire by limiting (lowering) or shutting off (stopping) the current in the case of an abnormality being detected, an alarm device that gives an alarm to the operator in the case of an abnormality being detected, and a display device of the operation state. Thereby, it is possible to prevent fusing and burn out of the superconducting wire 1 even when a non-superconducting transition occurs, and protect the superconducting wire 1 in a preferable condition.

Also, even when fusing and burn out of the superconducting wire has occurred or may occur, a position where a non-superconducting transition has occurred can be identified. Therefore, it is possible to perform necessary operations such as inspection, repair, and fixing replacement faster and more precisely.

### Superconducting Coil

The present exemplary embodiment can be applied to a superconducting coil which has a coil shape and is capable of generating electromagnetic force (hoop stress) by injecting current to the superconducting wire.

The superconducting coil may be a pancake-shaped coil in which a superconducting wire is curved in the thickness direction, and concentrically wound numerous times. Furthermore, two, or three or more coil can be stacked.

The optical fiber temperature sensor using an FBG described in Patent Document 4 and Non-patent Document 1 detects temperature variations based on Bragg wavelength shifts. In this case, the Bragg wavelength of an FBG may shift due to strain generated by hoop stress in a longitudinal direction of the optical fiber.

In other words, the temperature variations and the hoop stress may be detected similarly as the Bragg wavelength shift, the sensor may operate improperly. On the other hand, in Raman scattering light, an intensity change does not occur by strain (hoop stress) in a longitudinal direction of the optical fiber, only a temperature variation can be measured based on an intensity change. Therefore, even when the sensor is applied to a superconducting coil, non-superconducting transition can easily be detected.

In the present invention, a scattering light intensity is measured independently of deformation or strain of an optical fiber. Therefore, non-superconducting transition can be detected regardless of the superconducting wire having a coil shape or a straight shape, a coil of the superconducting wire being supported by a reel and the like from an inner side, or the coil being a hollow shape.

Hereinabove, the present invention has been described based on a preferred exemplary embodiment, however, the present invention is not limited the aforementioned exemplary embodiment, and various modifications can be made within a scope that does not depart from the gist of the present invention.

Hereinbelow, the present invention is explained in more detail with examples; however, the present invention is not limited to the following examples.

### Example 1

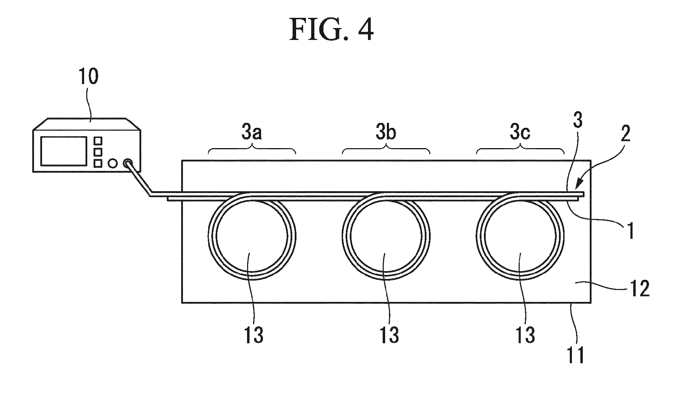

Fig. 4 is a structural diagram showing an embodiment of performing a method for detecting a non-superconducting transition of a superconducting wire 1 used in Example. Fig. 5A is a detailed structural diagram showing an embodiment of a non-superconducting transition portion where a non-superconducting transition is intentionally generated in the superconducting wire 1.

In the present Example, Hastelloy C276 with a width of 5 mm and a thickness of 0.1 mm is used for the substrate 1a of the superconducting wire 1. GdBCO (GdBa₂Cu₃O₇₋ₓ) with a width of 5 mm and a thickness of 0.001 mm (that is 1 µm) is used for the superconducting layer 1b. The critical temperature of this superconducting layer is approximately 90 K, and the critical current is approximately 230 A (the value under an environment of a temperature of 77 K and a magnetic field of 0 T). Copper with a width of 5 mm and a thickness of 0.3 mm is used for the metal stabilization layer 1c.

The optical fiber 3 is a GI multi-mode optical fiber where the outer diameter of the core that includes Ge doped silica glass is approximately 50 µm and the outer diameter of the cladding that includes pure silica glass is approximately 125 µm. The periphery of the cladding of the optical fiber 3 is coated with a coating layer consisting of polyimide with an outer diameter of 150 µm.

As the temperature measurement instrument 10, an ROTDR temperature measurement instrument AQ8940 (a model number) manufactured by Yokogawa Electric Corporation has been employed.

The optical fiber 3b arranged at a non-superconducting transition portion, at which a non-superconducting transition is intentionally generated with respect to the superconducting wire 1, is arranged adjacent to the metal stabilization layer 1c by using Apiezon® grease (trade name) as the attachment member 4, as shown in Fig. 5B. In addition, the surroundings of the optical fiber 3b and the superconducting wire 1 is covered by a Kapton® tape (trade name) to attach the optical fiber 3b to the superconducting wire 1. The total length of the optical fiber 3b arranged at the non-superconducting transition portion is approximately 0.4 m, as shown in Fig. 5A. The optical fiber 3b is attached in a coil shape at an outer circumference of a reel 13 with a diameter of 0.26 m formed of glass fiber-reinforced plastic. In addition, a resistive heater 14 formed of Hastelloy is provided substantially at the center of the optical fiber 3b.

The optical fiber 3a of approximately 304 m provided between the temperature measurement instrument 10 and the non-superconducting transition portion is provided at the superconducting wire 1. In addition, most of the portions of the optical fiber 3c of approximately 25 m provided at a side of an output end of the optical fiber 3 when viewed from the temperature measurement instrument 10 (i.e., a portion where a connected portion of the optical fiber 3a and the temperature measurement instrument 10 and the end portion of the optical fiber 3c are excluded from the optical fiber 3c) is provided at the superconducting wire 1. Furthermore, these optical fibers are attached in a coil shape together with the superconducting wire 1 at an outer circumference of a reel 13 with a diameter of 0.26 m formed of glass fiber-reinforced plastic.

Both the optical fiber 3a and the optical fiber 3c are arranged so as to adjacent to the metal stabilization layer 1c such that the temperature variation of the superconducting wire 1 can be measured based on the scattering light intensity over the entire length of the optical fibers 3a, 3b, and 3c. The optical fibers 3a, 3b, and 3c are configured by single optical fiber 3 where the core and the cladding are connected continuously.

Three reels 13, 13, and 13 respectively corresponding to the optical fiber 3a, 3b, and 3c are immersed into liquid nitrogen 12 inside a low temperature chamber 11, and maintained in 77 K.

Next, the superconducting wire 1 is energized with direct current of approximately 160 A only at a portion of the non-superconducting transition portion where the optical fiber 3b is arranged. In order to energize the superconducting wire 1, a current terminal is provided at the superconducting wire 1 in advance, the current terminal is connected to a power source (not shown).

As shown in Fig. 4, the superconducting wire 1 and the optical fiber 3 are divided into domains and attached to three reels 13 to limit positions at which non-superconducting transition and quench can be occurred within an area of the non-superconducting transition where the optical fiber 3b and the heater 14 are arranged. By comparing to a measurement value at a portion where non-superconducting transition has occurred measured by the temperature measurement instrument 10, it is possible to examine easily whether or not a position where non-superconducting transition has occurred (i.e., a length along the optical fiber 3 from the temperature measurement instrument 10) can be identified.

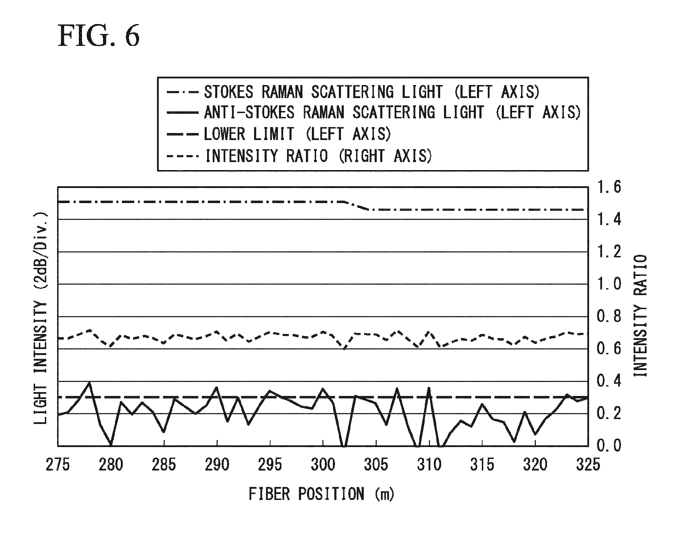

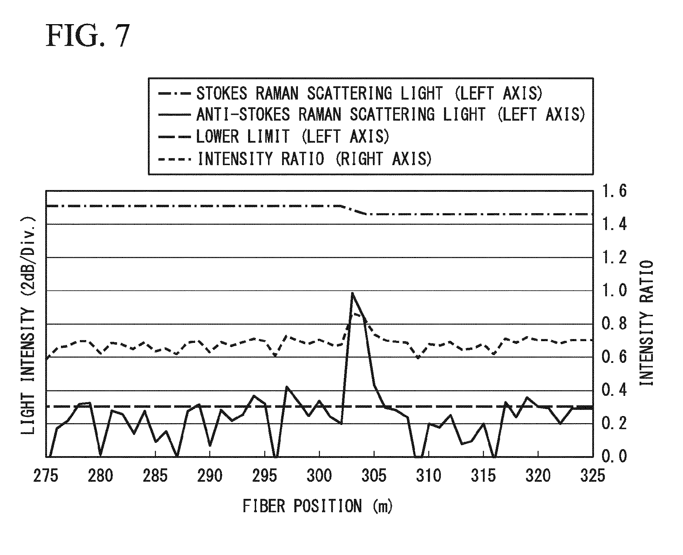

In Example 1, pulse light is injected to the optical fiber 3 from the temperature measurement instrument 10 with 2¹⁸ times (two-hundred sixty-two thousands one hundred and forty-four times), and each pulse light is time-resolved to measure positional dependence in an optical fiber of an intensity of Stokes Raman scattering light and an intensity of anti-Stokes Raman scattering light. The measurement process that the obtained positional dependence in an optical fiber of the scattering light intensities are averaged by all pulse lights (2¹⁸ pulses) is defined as 1 cycle, and each scattering light intensity has been measured. Figs. 6 and 7 show measurement results of 1 cycle corresponding to before the non-superconducting transition and at the time of the non-superconducting transition, respectively.

A measurement time per 1 cycle is 45 sec, and a measurement repetition rate is 0.022 cycle/sec (i.e., 0.022 Hz).

In Fig. 6, it is shown that positional dependence in an optical fiber of an intensity of Stokes Raman scattering light, an intensity of anti-Stokes Raman scattering light, and an intensity ratio therebetween before the non-superconducting transition has occurred. In the present Example, an ROTDR measurement is performed over the entire length of the optical fiber 3 so as to identify the position of the optical fiber. Note that, in the graph, results only on a section of 275 to 325 m which corresponds to a portion of the optical fiber 3a, an entire of the optical fiber 3b, and a portion of the optical fiber 3c is shown.

Note that since a length of the optical fiber 3a is approximately 304 m as described above, the optical fiber 3b with approximately 0.4 m length is arranged at approximately 304 m position in a horizontal axis of the optical fiber.

At any positions, the intensity of anti-Stokes Raman scattering light shows a value of a lower detection limit. In other words, since the intensity of anti-Stokes Raman scattering light is at or under the noise level of the temperature measurement instrument 10, it can be determined that the superconducting wire 1 is maintained at a temperature of liquid nitrogen (77 K).

Next, the heater 14 is energized to generate the non-superconducting transition in the superconducting wire 1 of the non-superconducting transition portion. In Fig. 7, it is shown that positional dependence in an optical fiber of an intensity of Stokes Raman scattering light, an intensity of anti-Stokes Raman scattering light, and an intensity ratio therebetween at the time of the non-superconducting transition has occurred. The measurement conditions in Fig. 7 are the same as the measurement conditions in Fig. 6.

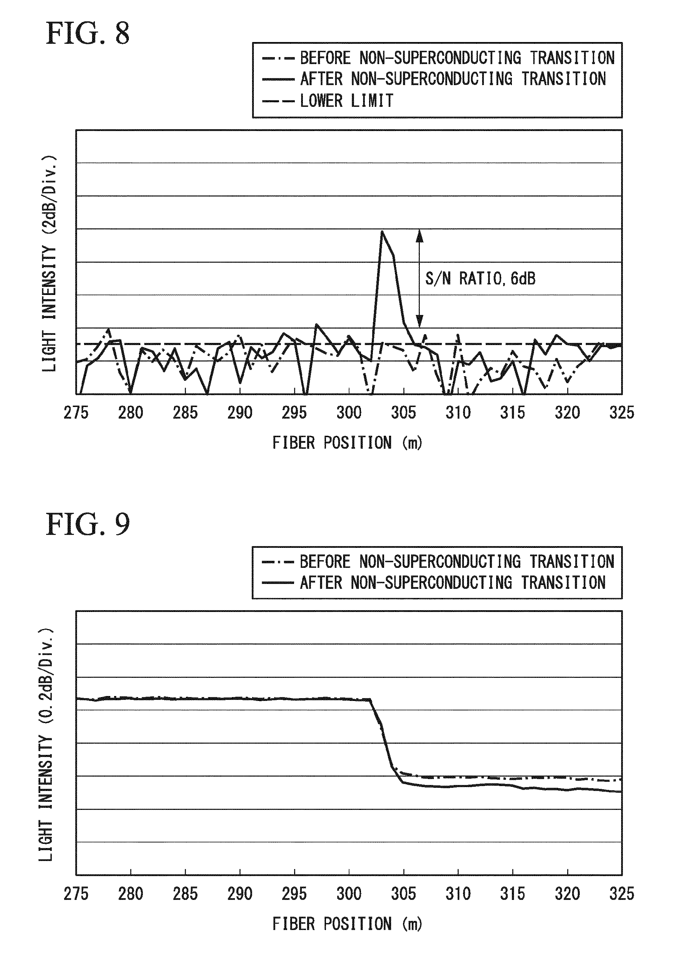

In addition, in Fig. 8, positional dependence in an optical fiber of an intensity of anti-Stokes Raman scattering light before the non-superconducting transition and at the time of the non-superconducting transition are comparatively shown. In Fig. 9, positional dependence in an optical fiber of an intensity of Stokes Raman scattering light before the non-superconducting transition and at the time of the non-superconducting transition are comparatively shown.

Regarding the optical fiber 3a at a side of the temperature measurement instrument 10 and the optical fiber 3c at a side of the end portion, not only in the sections shown in Figs. 6 and 7, but also in sections not shown in the graphs, an intensity of anti-Stokes Raman scattering light shows a value at or under the noise level before and after the non-superconducting transition.

As shown in Fig. 8, since anti-Stokes Raman scattering light at a 304 m point shows an intensity of approximately 6 dB higher than a noise level, it is determined that at the point, the temperature of the optical fiber 3b has increased. In other words, at this point, the temperature of the superconducting wire 1 increases and it is determined that the non-superconducting transition has occurred. As described above, the 304 m point, which is identified as a position where non-superconducting transition has occurred by the measurement in the present Example, corresponds to a position on the optical fiber 3b of the non-superconducting transition portion. As a result, based on the changes of the intensity of anti-Stokes Raman scattering light, it is demonstrated that non-superconducting transition in the superconducting wire 1can be detected.

In Fig. 9, the vertical scale is 0.2 dB/Div. (per one scale), and the scattering light intensity is shown at a magnification of more than 2dB/Div. in Fig. 8.

Although the non-superconducting transition has occurred at 304 m point, when an intensity of Stokes Raman scattering light is measured, the distinct optical intensity increase in line with the temperature increase has not been measured even at the time of the non-superconducting transition has occurred compared to before the non-superconducting transition has occurred. Rather, a small decrease in intensity of approximately 0.05 dB has been measured.

It is assumed that the results based on the fact that at only the optical fiber 3b at the 304 m point, a local loss (for example, a bending loss which occurs with an attachment to the reel 13) has been occurred before the non-superconducting transition. Therefore, when the temperature increases due to the non-superconducting transition, the superconducting wire 1 is deformed and it affects the bending loss of the optical fiber 3b. However, it is also possible to consider that such phenomena occur due to the structure of the present Example that the optical fibers 3a, 3b, and 3c are attached on the separate reels 13. Therefore, generally, it is impossible to detect a non-superconducting transition of the superconducting wire 1 based on the intensity changes of the Stokes Raman scattering light.

### Example 2

With the similar structure described in Example 1, a non-superconducting transition of the superconducting wire 1 is detected. However, in the present Example, pulse light injected to the optical fiber 3 from the temperature measurement instrument 10 per 1 cycle is 2¹² times (four thousands ninety-six times).

In other words, in Example 2, pulse light is injected to the optical fiber 3 from the temperature measurement instrument 10 with 2¹² times (four thousands ninety-six times), and each pulse light is time-resolved to measure the positional dependence in an optical fiber of an intensity of Stokes Raman scattering light and an intensity of anti-Stokes Raman scattering light. The measurement process that the obtained positional dependence in an optical fiber of the scattering light intensities are averaged by all pulse lights (2¹² pulses) is defined as 1 cycle, and each scattering light intensity has been measured.

A measurement time per 1 cycle is 2.5 sec, and a measurement repetition rate is 0.4 cycle/sec (i.e., 0.4 Hz).

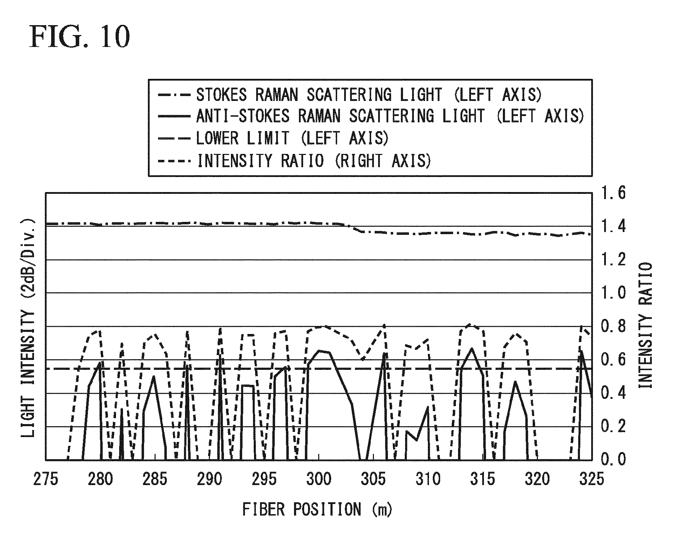

In Fig. 10, it is shown that positional dependence in an optical fiber of an intensity of Stokes Raman scattering light, an intensity of anti-Stokes Raman scattering light, and an intensity ratio therebetween before the non-superconducting transition has occurred. In the present Example, an ROTDR measurement is performed over the entire length of the optical fiber 3 so as to identify the position of the optical fiber. Note that, in the graph, results only on a section of 275 to 325 m which corresponds to a portion of the optical fiber 3a, an entire of the optical fiber 3b, and a portion of the optical fiber 3c is shown.

Note that since a length of the optical fiber 3a is approximately 304 m as described above, the optical fiber 3b with approximately 0.4 m length is arranged at approximately 304 m position in a horizontal axis of the optical fiber.

At all positions, the intensity of anti-Stokes Raman scattering light shows a value of a lower detection limit. In other words, since the intensity of anti-Stokes Raman scattering light is at or under the noise level of the temperature measurement instrument 10, it can be determined that the superconducting wire 1 is maintained at a temperature of liquid nitrogen (77 K).

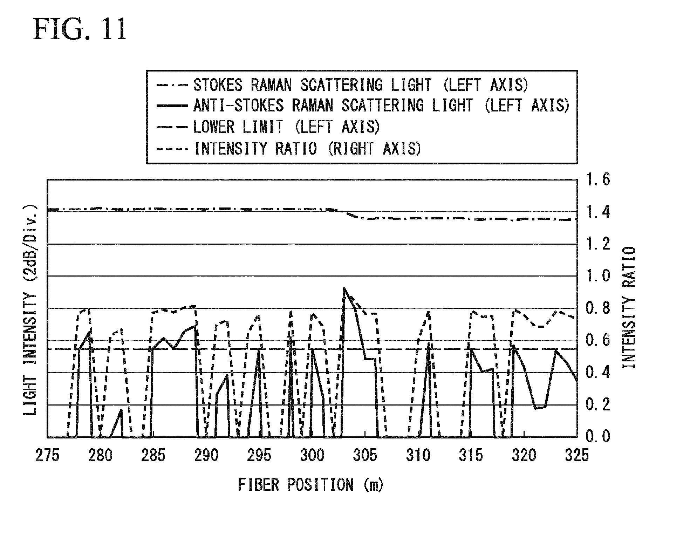

Next, the heater 14 is energized to generate the non-superconducting transition in the superconducting wire 1 of the non-superconducting transition portion. In Fig. 11, it is shown that positional dependence in an optical fiber of an intensity of Stokes Raman scattering light, an intensity of anti-Stokes Raman scattering light, and an intensity ratio therebetween at the time of the non-superconducting transition has occurred. The measurement conditions in Fig. 11 are the same as the measurement conditions in Fig. 10.

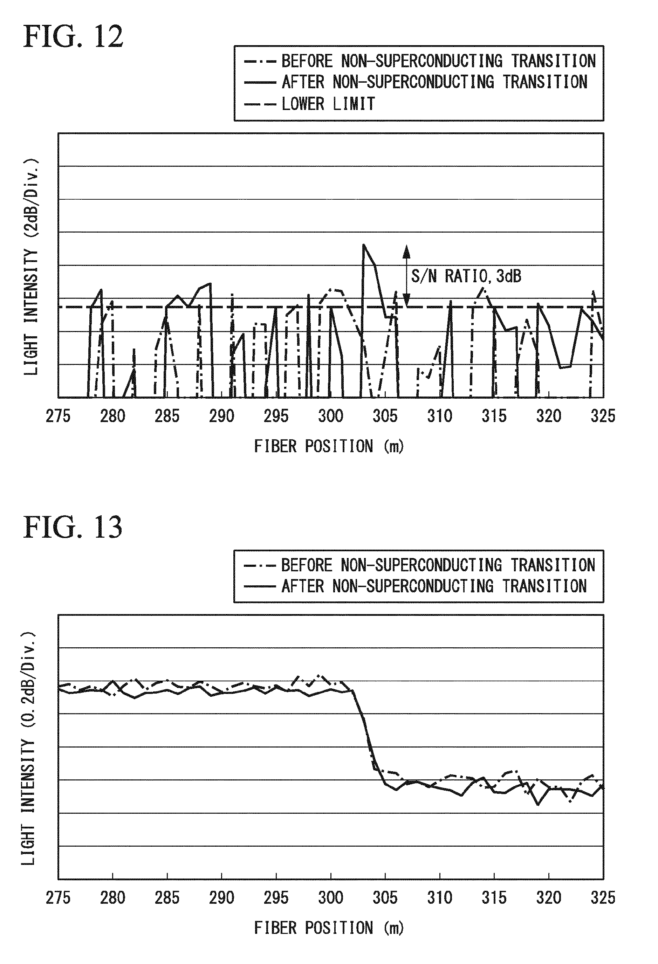

In addition, in Fig. 12, positional dependence in an optical fiber of an intensity of anti-Stokes Raman scattering light before the non-superconducting transition and at the time of the non-superconducting transition are comparatively shown. In Fig. 13, positional dependence in an optical fiber of an intensity of Stokes Raman scattering light before the non-superconducting transition and at the time of the non-superconducting transition are comparatively shown.

As shown in Fig. 12, since anti-Stokes Raman scattering light at a 304 m point shows an intensity of approximately 3 dB higher than a noise level, it is determined that at the point, the temperature of the optical fiber 3b has increased. In other words, at this point, the temperature of the superconducting wire 1 increases and it is determined that the non-superconducting transition has occurred. Also in Example 2, as the same as in Example 1, it is identified that non-superconducting transition has occurred at the 304 m point corresponding to a position on the optical fiber 3b of the non-superconducting transition portion.

In Fig. 13, the vertical scale is 0.2 dB/Div. (per one scale), and the scattering light intensity is shown at a magnification of more than 2dB/Div. in Fig. 12.

Although a non-superconducting transition has occurred at 304 m point, when an intensity of Stokes Raman scattering light is measured, the distinct optical intensity changes has not been measured before and after the non-superconducting transition has occurred.

In Example 1, a ratio of the noise level and a signal intensity at a 304 m point at which non-superconducting transition is detected (S/N ratio) was approximately 6 dB. In contrast, in Example 2, the S/N ratio was approximately 3 dB. This is because that in Example 2, since an average number at 1 cycle is less than an average number at 1 cycle in Example 1, the noise level is increased. However, in Example 2, since the average number at 1 cycle is decreased, it is possible to repeat the measurement at a greatly short period (2.5 sec).

When an S/N ratio has a greater value, accuracy of detecting non-superconducting transition improves. On the other hand, when a measurement repetition rate is faster, the non-superconducting transition can be detected earlier. Therefore, it is desirable to set an average number at 1 cycle in line with the detection accuracy and the detection time that are required in accordance with the characteristics of a superconducting wire (a critical temperature, critical current and the like) and an status of the superconducting wire (a cooling temperature, energizing current and the like).

According to the above-described Examples 1 and 2, by measuring an intensity of anti-Stokes Raman scattering light, non-superconducting transition occurred in a section of approximately 0.4 m of the superconducting wire with the total length of approximately 325 m and quench which occurs with the non-superconducting transition can be detected with high responsiveness. Therefore, as described above, in the present invention, it is impossible to detect a non-superconducting transition with an interval of 1 m with respect to the superconducting wire of 300 m.

### INDUSTRIAL APPLICABILITY

The present invention can be applied to a method for detecting a non-superconducting transition of a superconducting wire.

### DESCRIPTION OF THE REFERENCE SYMBOLS

- 1:: superconducting wire
- 1a:: substrate
- 1b:: superconducting layer
- 1c:: metal stabilization layer
- 2:: composite wire
- 3:: optical fiber
- 4:: attachment member
- 5:: coating material
- 10:: temperature measurement instrument
- 11:: low temperature chamber
- 12:: liquid nitrogen
- 13:: reel
- 14:: heater

## Claims

1. A method for detecting a non-superconducting transition of a superconducting wire comprising a substrate, a superconducting layer that has a critical temperature of 77
K or more, and a metal stabilization layer, the method comprising:
arranging an optical fiber on the superconducting wire;
injecting a measurement light into the optical fiber;
measuring an intensity of anti-Stokes Raman scattering light of the measurement light; and
detecting an occurrence of a non-superconducting transition in the superconducting wire based on an intensity variation of the anti-Stokes Raman scattering light.

2. The method for detecting a non-superconducting transition of a superconducting wire according to claim 1, comprising detecting the occurrence of the non-superconducting transition in the superconducting wire based on whether an increase in intensity of the anti-Stokes Raman scattering light is a predetermined value or more.

3. The method for detecting a non-superconducting transition of a superconducting wire according to claim 1 or 2, comprising:
using a pulse light as the measurement light; and
identifying a position where the non-superconducting transition occurs along a longitudinal direction of the optical fiber by measuring a time-resolved intensity of the anti-Stokes Raman scattering light of the measurement light.

4. The method for detecting a non-superconducting transition of a superconducting wire according to any one of claims 1 to 3, wherein the optical fiber is a multi-mode fiber having a core diameter of 50 µm or more.

5. The method for detecting a non-superconducting transition of a superconducting wire according to any one of claims 1 to 4, wherein the superconducting wire has a coil shape.
